# EUROPEAN PATENT APPLICATION

(11) **EP 1 915 931 A2**
(43) Date of publication of application: **30.04.2008**
(21) Application number: 07020540.6
(22) Date of filing: 19.10.2007
(51) Int. Cl.: A47J 31/40

(54) **Mixer, in particular for machines for preparing hot instant drinks**

(30) Priority: 24.10.2006 IT VR20060162
(71) Applicant: F.A.S. International S.p.A., 36015 Schio (Vicenza) (IT)
(72) Inventor: Morabito, Giuseppe, 36015 Schio (Vicenza) (IT); Bertuglia, Giovanni, 36015 Schio (Vicenza) (IT)
(74) Representative: Fiorani, Giuseppe

(57) **Abstract**

The present invention concerns a mixer for preparing hot instant drinks, comprising a supply device connected to a mixing body equipped with a mixing impeller, forced-suction means and at least one evacuation flue being envisaged.

## Description

The present invention relates to a mixer, in particular for machines for preparing hot instant drinks.

At present the devices for preparing instant drinks, such as, for example, chocolate, milk, etc., are equipped with mixing devices compriseing of a series of mixers, each of which is typically associated with a container for instant powder.

Via a supply pipe or chute, the instant powder is supplied, together with the water, to a supply funnel which is associated, in a bottom zone thereof, with a mixing chamber.

The mixing chamber supplies the mixture contained inside it to a body of the mixer inside which a mixing impeller operates, said impeller "whisking" the mixture of water and instant powder following rotation of a drive shaft.

In order to prevent the deposition of powder and water vapour along the supply pipes, devices for sucking up the water vapour which forms during mixing of the boiling water with the powder are provided in the vicinity of the supply funnels.

These suction devices generally comprise a centralised aspirator connected, by means of respective suction pipes, to each of the supply funnels so as to suck up any water vapour mixed with the residual powder which tends to rise, through the chute, towards the supply pipes or chutes.

The mixers described above, although being widely used nowadays, are not devoid of drawbacks.

In fact, the mixer and the aspirator are operated by the same motor. When the motor stops, suspended water vapour, produced by the high temperature of the water (about 100°C) and mixed with powder, is nevertheless still present in the mixer zone.

This residual powder or condensation tends to migrate, not only towards the pipes, but also into the vicinity of the inner walls of the supply device.

In order to remove this residue, it would be convenient to be able to operate the aspirators in order to evacuate any residual powder or condensation.

However, it is clear that intermittent operation of the suction devices would give rise, on the one hand, to wear thereof and, on the other hand, to a considerable increase in the management costs as well as the noise levels of the machines.

The main task of the present invention is to provide a mixer, in particular for machines for preparing hot instant drinks, which allows elimination or at least a drastic reduction of the drawbacks mentioned above, allowing evacuation of these particles independently of operation of the motor.

As part of this task one important object of the present invention is to provide a mixer which allows the supply pipe to be kept clean in a reliable and efficient manner.

Another object of the present invention is to propose a mixer, in particular for machines for preparing hot instant drinks, with a very simple structural design and having a production cost which is competitive in such a way that use thereof is advantageous also from an economic point of view.

This task, as well as these and other objects which will appear more clearly below, are achieved by a mixer, in particular for machines for preparing hot instant drinks, comprising a supply device which can be supplied, by means of a supply pipe, with instant powder contained inside at least one containing part and connected, by means of a feeder pipe, to a water supply unit, said supply device being connected to a mixing body equipped with a mixing impeller supported by a drive shaft kinematically connected to motor means, forced-suction means which can be connected with the interior of said supply device being envisaged, characterized in that it comprises at least one evacuation flue having, at one end, an intake mouth communicating with the interior of said supply device and, at the opposite end, a discharge mouth, arranged at a height greater than that of said intake mouth and communicating with the exterior of said supply device.

Further characteristic features and advantages of the invention will emerge more clearly from the description of some preferred, but not exclusive embodiments of a mixer, in particular for machines for preparing hot instant drinks, in accordance with the present invention, illustrated by way of a non-limiting example in the accompanying drawings where:
Figure 1 shows an exploded view of a mixer, in particular for machines for preparing hot instant drinks;
Figure 2 shows, viewed from above, a mixer, in particular for machines for preparing hot instant drinks shown in the exploded view of Figure 1;
Figure 3 is a cross-section through the mixer, in particular for machines for preparing hot instant drinks, along the plane defined by the line III-III in Figure 2;
Figure 4 shows an exploded view of a constructional variant of the mixer, in particular for machines for preparing hot instant drinks; while
Figure 5 shows, again in a perspective view, the mixer, in particular for machines for preparing hot instant drinks.

In the examples of embodiment which follow, individual characteristic features, illustrated in connection with specific examples, may in reality be interchanged with other different characteristic features present in other examples of embodiment.

Moreover, it should be noted that everything which, during the course of the procedure for granting of the patent, proved to be already known is understood as not being claimed and subject to a disclaimer.

With reference to the abovementioned Figures, a mixer, in particular for preparing hot instant drinks, is denoted overall by the reference number 1; the mixer 1 comprises a supply device 2 connected, by means of supply pipe 3, to a part 4 for containing instant powder.

In particular, the supply pipe 3 may comprise a chute 3a which is arranged above the supply device 2 and at a distance from it so as to allow the instant powder to fall inside it.

The supply device 2 is also connected, by means of a feeder pipe 6, to a water supply unit not shown in the Figures.

The supply device 2 is provided underneath with a mixing body 7 inside which a mixing impeller 8 is rotatable upon operation.

Generally, the mixing impeller 8 is keyed onto the end of a drive shaft 9 which is kinematically connected to motor means 10 which are known per se and comprise, for example as shown, an electric motor.

The supply device 2, and in particular a portion formed inside it, can be connected to forced-suction means 20 which are intended to remove the water vapour and any residual powder formed during mixing of the instant powder with the water in the supply device 2.

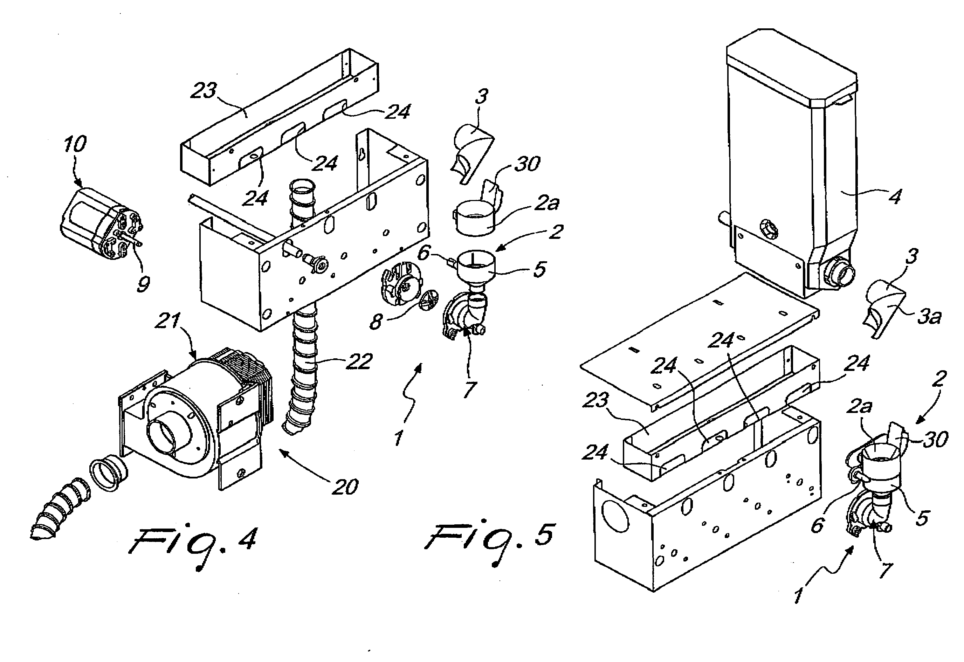

With reference to Figures 4 and 5, according to a first example of embodiment, the forced-suction means 20 comprise a centralised aspirator 21 connected, by means of a connection pipe 22 to an intake header 23 which is connected, by means of respective suction mouths 24, to each of the supply devices 2.

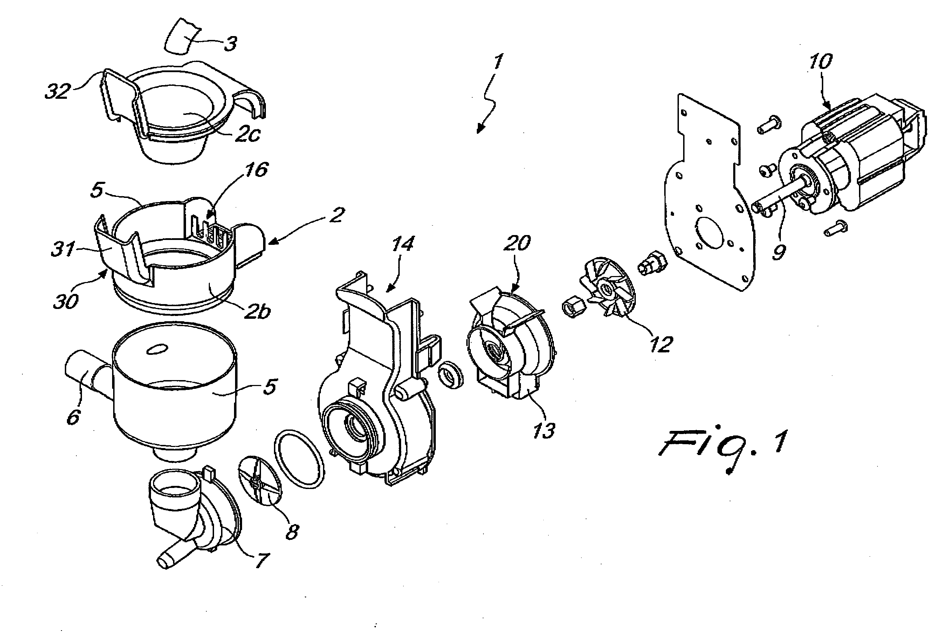

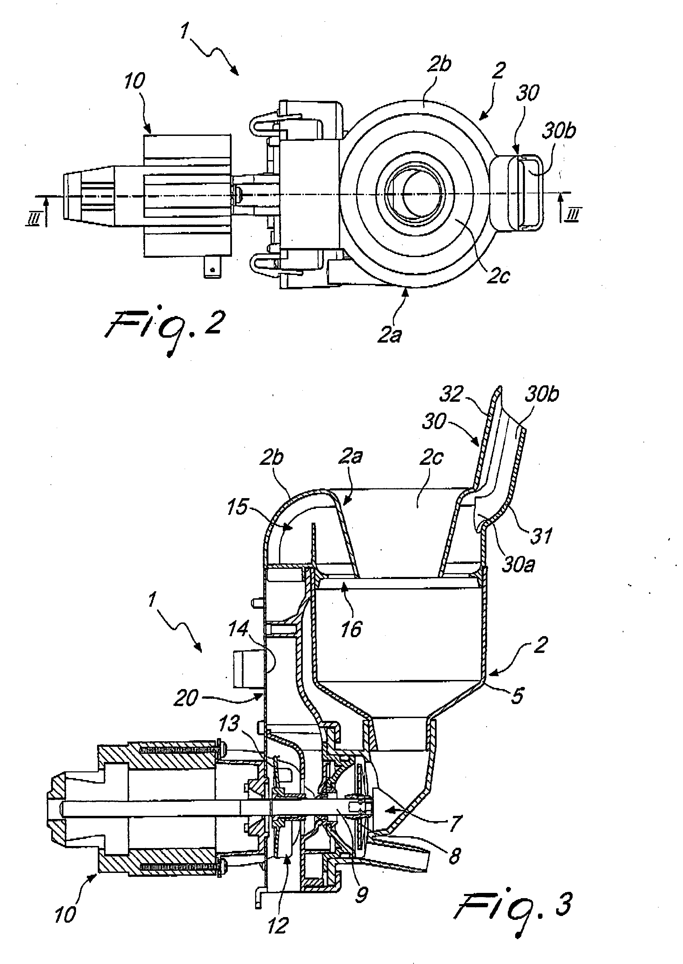

According to another variation of embodiment, shown in Figures 1 to 3, the forced-suction means 20 can be operated, as will be specified and described more clearly below, directly by the motor means 10.

According to the present invention, the supply device 2 is associated with at least one evacuation flue 30.

In particular, the evacuation flue 30 has, as clearly shown in the cross-section of Figure 3, at one end, an intake mouth 30a communicating with the interior of the supply device 2 and, at the opposite end, a discharge mouth 30b arranged at a height greater than that of the intake mouth 30a and communicating with the exterior of the supply device 2.

In particular, it may be advantageous to envisage that the supply device 2 has, at the top, a supply funnel 2a having a substantially cylindrical outer body 2b and a conical inner body 2c.

The outer body 2b and the conical inner body 2c define, in the space situated between them, a suction chamber 15 which is in fluid communication with the interior of the supply device 2 and communicates with the intake mouth 30a.

Conveniently, the forced-suction means 20 are connected to a suction aperture 16 also defined in the suction chamber 15.

With reference to the embodiment shown in Figures 1 to 3, the forced suction means 20 may comprise a suction fan 12 which is keyed directly onto the drive shaft 9 and housed inside a suction volute 13.

Advantageously a suction header 14 is arranged between the suction volute 13 and the supply pipe 3.

In greater detail, the supply device 2 comprises a supply funnel 2a, arranged underneath the supply pipe or pipes 3, and supply chamber 5 connected to the feeder pipe 6.

Advantageously, the supply funnel 2a may have, as mentioned, an outer body 2b which is substantially cylindrical and arranged above the supply chamber 5, and a conical inner body 2c.

The suction chamber 15, which is defined between the outer body 2b and the conical inner body 2c, is - as can be clearly seen from the figures - in fluid communication with the interior of the supply chamber 5.

According to an important feature of the invention, the intake mouth 30a communicates with the suction chamber 15 and, in particular, with an upper portion thereof so as to ensure efficient evacuation of the vapour and/or residual powder.

Conveniently, the evacuation flue 30 has a flow cross-section increasing gradually from the intake mouth 30a in the direction of the discharge mouth 30b.

Preferably, the evacuation flue 30 is formed as two parts and, in particular, as a first part 31 integral with the outer body 2b and a second part 32 integral with the conical inner body 2c. This allows easier cleaning during maintenance.

The evacuation flue 30 has an elbow bend for reducing interference between the evacuation flue and the other components inside the dispenser.

The evacuation flue 30 terminates in a small bend, thus rendering the upper mouth inclined so as to impart to the vapour being removed a horizontal velocity component such as to propel it as far as possible from the zone and reduce the possibility of swirling or suction back inside.

The operating principle of the mixer, in particular for machines for preparing hot instant drinks according to the invention can be clearly determined from the description given above.

In particular, once the instant drink has been selected, a central control unit supplies, to the supply chamber, the quantities and necessary type of water and powder and, at the same time, operates the motor means which cause rotation of the mixing impeller.

At the same time, the forced-suction means are activated and usually remain in operation until the end of the mixing process.

Once mixing and consequently forced suction of the air has been completed, the presence of the evacuation flue allows, in any case, the powder and any condensation which has formed at the end of the mixing process or which has not been extracted by the forced-suction means to be conveyed outside the supply device through the flue itself.

All the characteristic features of the invention which have been indicated above as advantageous, suitable and the like may also not be present or be replaced by equivalent features.

The invention thus conceived may be subject to numerous modifications and variations, all of which fall within the scope of the inventive idea.

It has in practice been shown how in all its constructional forms the invention fulfils the task and the objects assigned to it.

In practice all the materials used as well as the dimensions and contingent forms may be of any nature, according to requirements.

Moreover, all the details may be replaced by other technically equivalent elements.

Where the technical characteristics in the claims are followed by reference numbers and/or letters, said reference numbers and/or letters have been added with the sole purpose of facilitating comprehension of the claims and therefore said reference numbers and/or letters do not limit the scope of each part identified solely for illustrative purposes by said reference numbers and/or letters.

## Claims

1. Mixer, in particular for machines for preparing hot instant drinks, comprising a supply device which can be supplied, by means of a supply pipe, with instant powder contained inside at least one containing part and connected, by means of a feeder pipe, to a water supply unit, said supply device being connected to a mixing body equipped with a mixing' impeller supported by a drive shaft kinematically connected to motor means, forced-suction means which can be connected with the interior of said supply device being envisaged, **characterized in that** it comprises at least one evacuation flue having, at one end, an intake mouth communicating with the interior of said supply device and, at the opposite end, a discharge mouth, arranged at a height greater than that of said intake mouth and communicating with the exterior of said supply device.

2. Mixer according to Claim 1, **characterized in that** said supply device comprises, at the top, a supply funnel having a substantially cylindrical outer body and a conical inner body defining, in the space situated between them, a suction chamber in fluid communication with the interior of said supply device and communicating with said intake mouth.

3. Mixer according to one or more of the preceding claims, **characterized in that** said intake mouth communicates with an upper portion of said suction chamber.

4. Mixer according to one or more of the preceding claims, **characterized in that** said at least one evacuation flue has a flow cross-section gradually increasing from the said intake mouth in the direction of said discharge mouth.

5. Mixer according to one or more of the preceding claims, **characterized in that** said at least one evacuation flue is formed as at least two parts, i.e. at least one first part integral with said outer body of said supply funnel and at least one second part integral with said conical inner body of said supply funnel.

6. Mixer according to one or more of the preceding claims, **characterized in that** said forced-suction means comprise a centralised aspirator which is connected, by means of a connection pipe, to an intake header connected, by means of respective suction mouths, to each of the supply devices.

7. Mixer according to one or more of the preceding claims, **characterized in that** said forced-suction means comprise a suction fan which is keyed directly onto said drive shaft and is housed inside a suction volute 13 communicating with a respective suction header emerging, via a suction aperture, inside said suction chamber.

8. Mixer according to one or more of the preceding claims, **characterized in that** said at least one evacuation flue has a small bend in the vicinity of said discharge mouth so as to impart to the particles being evacuated a horizontal velocity component.
